# EUROPEAN PATENT APPLICATION

(11) **EP 1 962 474 A1**
(43) Date of publication of application: **27.08.2008**
(21) Application number: 07254997.5
(22) Date of filing: 20.12.2007
(51) Int. Cl.: H04L 29/08

(54) **Method and apparatus for mutually-shared media experiences**

(30) Priority: 29.12.2006 US 648263
(71) Applicant: Intel Corporation, Santa Clara, CA 95052 (US)
(72) Inventor: Miller, John D., Portland OR 97229 (US)
(74) Representative: Beresford, Keith Denis Lewis

(57) **Abstract**

To bring back the social aspects of sharing and enjoying music, images, video, or other media with others, network addressable personal media players communicate with one another to create a shared, synchronized real-time playback experience.

## Description

### Field of the Invention

The present invention is generally related to media players. More particularly, the present invention is related to an apparatus and method for providing mutually-shared experiences using mobile media players.

### Description

Personal media players, such as, but not limited to, the iPod, manufactured by Apple Computer, Inc., have ushered in a whole new era in personal entertainment and media consumption that has not been experienced since the Walkman®, manufactured by Sony Electronics, Inc. Some personal media players hold thousands of songs, and may also hold video as well. Media players generally possess excellent audio fidelity, yielding a high-quality personal experience. However, in-ear monitors, also known as headphones or "earbuds", do not lend themselves to social sharing of the experience: each person tends to be isolated, enjoying their media, but unable to share with others in the sort of same-time, same-place experience of playing music over loudspeakers, where all participants can enjoy it together. Even when two individuals have a personal media player with the exact same songs stored on them, the two individuals cannot listen to the same songs together at the same time - unless the two individuals are co-located, and one of the personal media players is connected to speakers or one of the media players includes two headphone jacks.

Thus, to bring back the social aspects of sharing and enjoying music, images, video, or other media with others, what is needed is an apparatus and method that enables personal media players to communicate with one another to create a shared, synchronized real-time playback experience.

### BRIEF DESCRIPTION OF THE DRAWINGS

The accompanying drawings, which are incorporated herein and form part of the specification, illustrate embodiments of the present invention and, together with the description, further serve to explain the principles of the invention and to enable a person skilled in the pertinent art(s) to make and use the invention. In the drawings, like reference numbers generally indicate identical, functionally similar, and/or structurally similar elements. The drawing in which an element first appears is indicated by the leftmost digit(s) in the corresponding reference number.

FIG. 1 is an exemplary diagram illustrating a personal media player capable of carrying out the teachings described herein according to an embodiment of the present invention.

FIG. 2 is an exemplary diagram illustrating a wireless point-to-point connection between personal media players according to an embodiment of the present invention.

FIG. 3 is an exemplary diagram illustrating a network connection between personal media players according to an embodiment of the present invention.

FIG. 4 is a diagram illustrating an exemplary shared experience amongst personal media player users in a virtual party according to an embodiment of the present invention.

FIG. 5 is a flow diagram describing an exemplary method for enabling a master device to establish a virtual party according to an embodiment of the present invention.

FIG. 6 is a flow diagram describing an exemplary method for enabling a master device to control play of the playlist during a virtual party according to an embodiment of the present invention.

FIG. 7 is a flow diagram describing an exemplary method for slave devices in a connection-oriented virtual party according to an embodiment of the present invention.

### DETAILED DESCRIPTION

While the present invention is described herein with reference to illustrative embodiments for particular applications, it should be understood that the invention is not limited thereto. Those skilled in the relevant art(s) with access to the teachings provided herein will recognize additional modifications, applications, and embodiments within the scope thereof and additional fields in which embodiments of the present invention would be of significant utility.

Reference in the specification to "one embodiment", "an embodiment" or "another embodiment" of the present invention means that a particular feature, structure or characteristic described in connection with the embodiment is included in at least one embodiment of the present invention. Thus, the appearances of the phrase "in one embodiment" or "in an embodiment" appearing in various places throughout the specification are not necessarily all referring to the same embodiment.

Embodiments of the present invention are directed to an apparatus and method for enabling personal media players to create a shared, synchronized real-time playback experience across multiple personal media players. This is accomplished using network addressable personal media players that are operable using a protocol that enables personal media players having wireless and/or wired network capabilities to communicate with one another. Embodiments of the present invention extend personal media players into a social realm by making music and video enjoyment on a personal media player a shared experience. With embodiments of the present invention, the shared experience occurs in a selective, participatory manner by creating a virtual party. Since the virtual party occurs over networked devices, participants of the virtual party may be co-located or many miles apart. Note that throughout this Specification, a user/device that initiates the virtual party may be referred to as the host/master/server and the participants/devices that join the virtual party may be referred to as guests/slaves/clients, respectively.

Although embodiments of the present invention are described with respect to the shared, synchronized real-time playback of songs, the shared, synchronized real-time playback of video (including images, still and animated graphics, and other types of video) is also applicable using the teachings described herein.

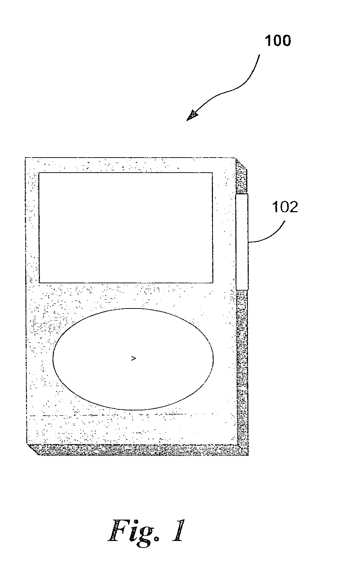

FIG. 1 is an exemplary diagram illustrating a personal media player 100 capable of carrying out the teachings described herein according to an embodiment of the present invention. Personal media player 100 comprises a typical personal media player, such as, for example, an iPod manufactured by Apple Computer, Inc., coupled with networking capabilities, such as, for example, a network interface controller 102. Network interface controller 102 may enable personal media player 100 to communicate over wired and wireless networks. Communication over wired and wireless networks is well-known in the art(s), and may include current wired and wireless networks as well as future wired and wireless networks. Personal media player 100 operates according to a communication protocol, described in further detail below, that enables a shared, synchronization real-time playback experience across multiple personal media players.

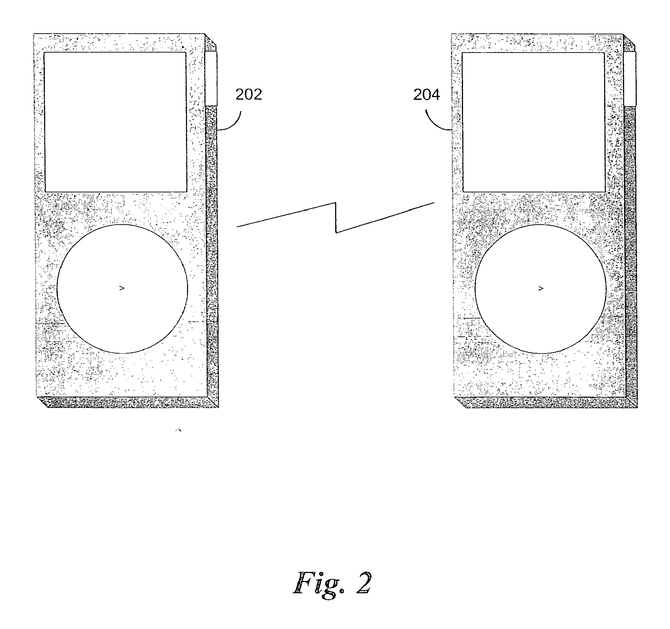

As indicated above, embodiments of the present invention enable the synchronization of the media experience across participating personal media players for audio as well as video over a wireless or wired network. FIG. 2 is an exemplary diagram illustrating a wireless point-to-point connection between personal media players according to an embodiment of the present invention. FIG. 2 shows a first personal media player 202 in communication with a second personal media player 204 via a wireless point-to-point connection. The point-to-point connection may be implemented via Bluetooth, WiFi (Wireless Fidelity) "ad hoc" mode, or any other suitable technology. The choice of technology dictates range as well as cost, power consumption, number of participants, immunity from interference, etc.

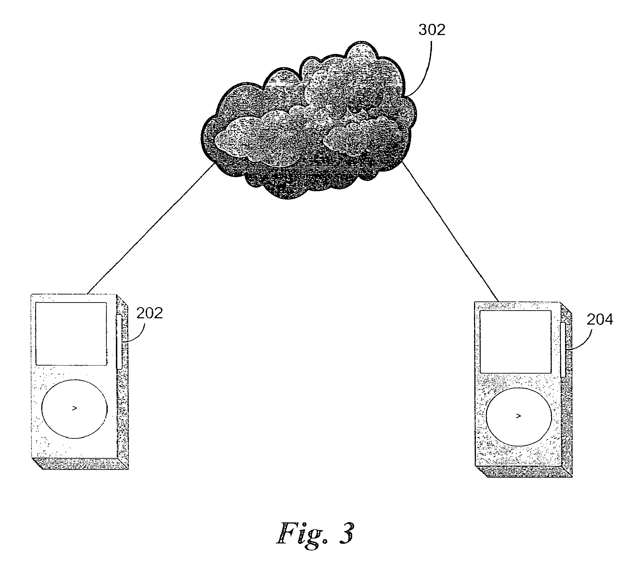

FIG. 3 is an exemplary diagram illustrating a network connection between personal media players according to an embodiment of the present invention. In this instance, first personal media player 202 communicates with second personal media player 204 via a network 302 in a manner well-known to those skilled in the relevant art(s). Networked connections may include, but are not limited to, cellular, WiFi, WiMAX (short for Worldwide Interoperability for Microwave Access), wired Ethernet, etc. Different devices may use different technologies to access network 302. First and second personal media players 202 and 204 may connect to network 302 via a network gateway such as, for example, a WiFi access point, cell tower, cable modem, etc.

Note that the range of wireless technologies does not limit the distance between media devices, as networking technologies provide for one media device to communicate through another networked device, such as, for example, a gateway or router, to a larger network. Note also that in embodiments of the invention, the media devices may be wired or wireless, and in some instances, may not necessarily be mobile devices.

Many different types of network connections may be implemented on top of any current or future networking protocol or protocols. As currently practiced in the art, devices are insulated from such matters by way of the OSI (Open System Interconnection) networking stack or similar, which abstracts the details of the physical connection from the upper layers. For example, a vast array of devices can today communicate with one another via the Internet, with their users and applications largely oblivious to the many layers of software and networking hardware in between them.

Embodiments of the present invention enable the shared experience across personal media players by enabling each personal media player in the virtual party to play the same media selection at exactly the same time. This is accomplished by synchronizing a playlist such that all of the participants may experience listening to the same songs at the exact same time, thereby having a shared experience.

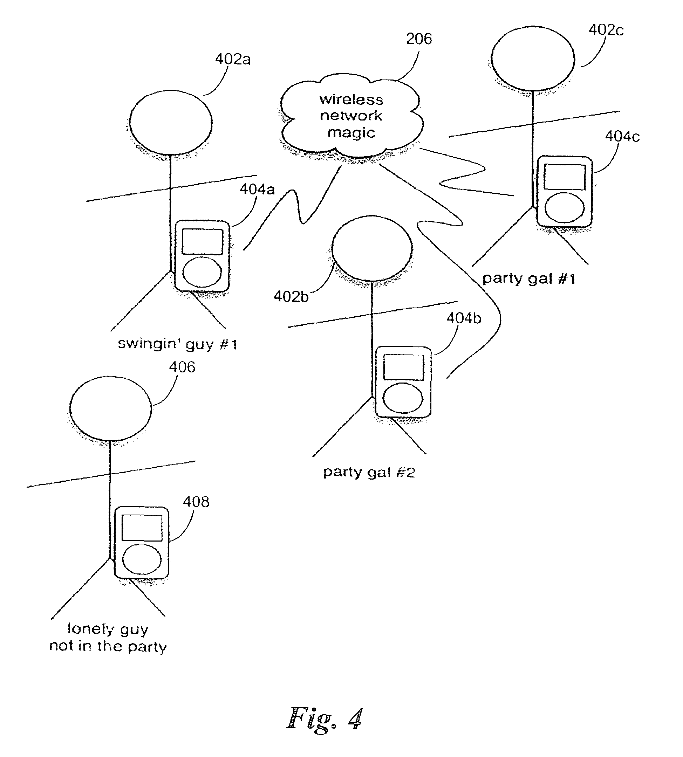

FIG. 4 is a diagram illustrating an exemplary shared experience amongst personal media player participants in a virtual party according to an embodiment of the present invention. FIG. 4 shows a plurality of participants 402a, 402b, and 402c of personal media players 404a, 404b, and 404c connected via a wireless network 410, and synchronized to simultaneously listen to the same songs at the same time using a communication protocol described herein. Each participant 402a, 402b, and 402c experiences listening to the playlist at the same time, while receiving the benefit of having the experience be locally controllable.

One participant acts as the host/master, while the other participants act as the guests/slaves. The host/master is in charge of organizing the virtual party by preparing or selecting the playlist, setting party parameters, announcing the party, etc. The guest/slave, upon finding out about the virtual party, may connect to the virtual party to enjoy the playlist. If a guest/slave (402a, 402b, or 402c) does not have a selection from the playlist on their personal media player (404a, 404b, or 404c), the guest/slave (402a, 402b, or 402c) may purchase the selection online using services such as, but not limited to, iTUNES or other services available that allow one to download the media locally. In one embodiment, the guest/slave (402a, 402b, or 402c) may be able to obtain the media and have it downloaded directly from the host/master (402a, 402b, or 402c) of the virtual party. That is, if the host/master has the proper digital media rights that allow it to download the media to a guest/slave, the guest/slave can receive a copy of the media from the host/master. In embodiments in which a guest/slave (402a, 402b, or 402c) does not wish to purchase media missing from the playlist on their personal media player (404a, 404b, or 404c), the guest/slave (402a, 402b, or 402c) may choose another media selection from their personal media player (404a, 404b, or 404c) to play in place of the missing media selection, may randomly or sequentially have a selection on their personal media player (404a, 404b, or 404c) from a special playlist to play in place of the missing media selection, or may not listen to anything while the missing media selection is being played. If a guest/slave (402a, 402b, or 402c) chooses to listen to another selection while a missing media selection is being played, the media selection may fade out when the missing selection is completed.

FIG. 4 also shows a user 406 of a personal media player 408 that would like to join the virtual party, even though the virtual party has already begun. User 406 may join the virtual party in mid-stream. In connection-oriented embodiments, user 406 may initiate a request to join the party via personal media player 408 and, in reply, receive an acceptance or a rejection from the personal media player of the host/master of the virtual party. The connection-oriented protocol is described below. In connectionless embodiments, user 406 may join the virtual party via personal media player 408 simply by receiving the information being transmitted by the personal media player of the host/master of the virtual party according to a connectionless protocol of the present invention. The connectionless protocol is described below as well. The ability for a user to join a virtual party in mid-stream is accomplished by allowing the personal media player of the host/master of the virtual party to continuously transmit the playlist, current song, and current song position while the virtual party is ongoing.

In another embodiment of the present invention, the host/master may be implemented as a central server or service, similar to a web server. In this embodiment, the media would scale to many more clients than can be supported by a single personal media player acting as the host/master using today's technologies. A server or service typically has higher bandwidth networking connections, higher system throughput and computational power, and more importantly, is not limited by battery power. Another embodiment of the present invention may utilize a hybrid approach, wherein the virtual party is still controlled by at least one personal media player, but hosted on a central server or service, thereby retaining the local control characteristics of the all-media player configuration yet providing the scale of the large-scale server configuration.

The protocol used to enable this shared experience allows for at least four types of operational commands: playlist commands, transport commands, virtual party commands, and a synchronization command. The playlist commands are commands that enable one to generate, manipulate, and save media playlists. The commands include, but are not limited to, a sync (copy) list; select media; add media; delete media; reorder media; get information about media; copy/purchase media; save playlist. The transport commands consist of commands that enable one to enjoy the entertainment of a playlist. These commands include, but are not limited to, start (play); stop/pause; rewind/fast forward; previous/next index (marker); previous/next media selection; jog/shuttle media position; and set play speed (1.0X is normal speed). The virtual party commands are commands that enable the creation of a virtual party. These commands include, but are not limited to, create party; advertise party; discover party; join party; invite others to party; and save party participant list. The synchronization command enables others to synchronize play of the playlist, and in particular, the media selection currently being played using the current position of the current media selection. In one embodiment, this command may be in the format of current time, which is, for example, "hours::minutes:seconds::frame".

Embodiments of the present invention include three different communication protocols for enabling communication between personal media players to provide a shared experience. The protocols include a duplex or connection-oriented protocol, a simplex or half-duplex protocol, and a hybrid or connectionless duplex protocol. Each protocol type requires a host/master device and one or more guest/slave devices. In one embodiment, the master device (that is, personal media player used by the host of the virtual party) may be referred to as the server and the one or more slave devices (that is, personal media players used by those joining the virtual party) may be referred to as the client(s). Note that one of host/guest, master/slave, and server/client may be used without departing from the scope of the invention. With each protocol type, the host/master device establishes the virtual party.

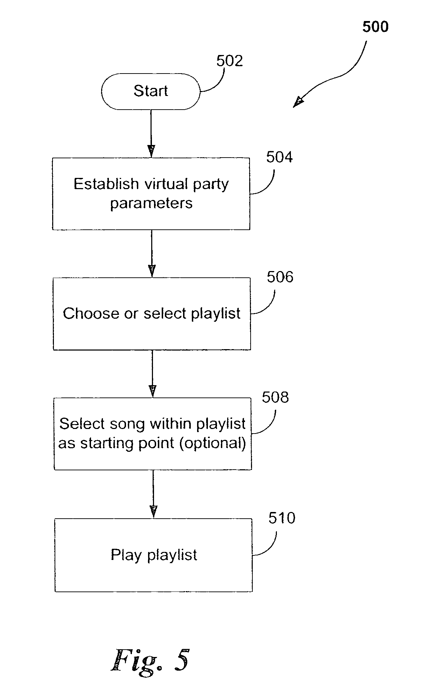

FIG. 5 is a flow diagram 500 describing an exemplary method for enabling a master device to establish a virtual party according to an embodiment of the present invention. The invention is not limited to the embodiment described herein with respect to flow diagram 500. Rather, it will be apparent to persons skilled in the relevant art(s) after reading the teachings provided herein that other functional flow diagrams are within the scope of the invention. The process begins with block 502, where the process immediately proceeds to block 504.

In block 504, a user of the master device establishes the virtual party parameters. This includes providing an identification for the virtual party, a title for the virtual party, virtual party genre, virtual party producer, virtual party description, a playlist identification, a playlist title, a next song gap time (that is, the amount of time between songs), determining how long the virtual party will last, determining how many media selections will be included, determining whether the songs in the playlist will be played sequentially or randomly, determining how often the song position is announced during play of a song, determining how often the song name is announced during play of the playlist, determining how often the playlist is announced during the virtual party, determining how often the virtual party is announced during the virtual party, etc. In one embodiment, the master device may keep track of past virtual parties and the identification of the participants from each past virtual party. If so desired by the user of the master device, the user of the master device may only enable participants of past virtual parties to join the current virtual party. In other words, one of the virtual party parameters may be a virtual party invitation list. The process then proceeds to block 506.

In block 506, the user may choose songs for generating a playlist or may select a playlist already residing on the master personal media player. When generating a playlist, each song may be assigned an identification. Information about each song may also be provided by the user, such as, but not limited to, the title of the song, artist(s) singing the song, composer, release date, whether the song is copyright protected, and the duration of the song. If the user wishes to play a song that is not found on the master device, the user may purchase the song in a well known manner. The process then proceeds to block 508.

In block 508, the user may optionally select a song within the playlist in which to begin playing the playlist. The process then proceeds to block 510, where the playlist may be started when the user of the master device is ready.

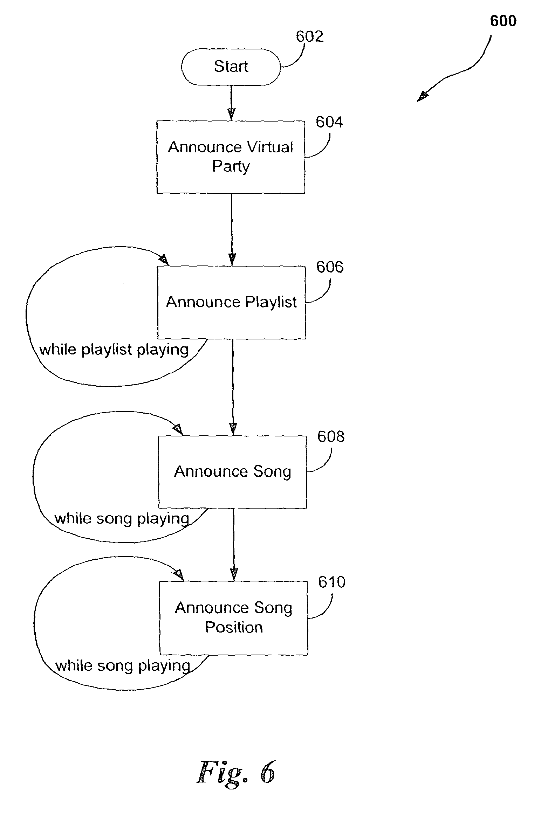

As previously indicated, the master device controls the virtual party. FIG. 6 is a flow diagram 600 describing an exemplary method for enabling a master device to control play of the playlist during a virtual party according to an embodiment of the present invention. The invention is not limited to the embodiment described herein with respect to flow diagram 600. Rather, it will be apparent to persons skilled in the relevant art(s) after reading the teachings provided herein that other functional flow diagrams are within the scope of the invention. The process begins with block 602, where the process immediately proceeds to block 604.

In block 604, the master device announces the virtual party. In one embodiment, the announcement of the virtual party comprises announcing certain information about the virtual party, such as, for example, the virtual party name, genre, producer, description, etc. In one embodiment in which the master device has made an invitation list, the master device may announce the party to the users of the slave devices included in the invitation list. If the master device has not made an invitation list, the master device may announce the virtual party by listening to see if anyone would like to join the party or by just starting the virtual party. In one embodiment, the virtual party information may be continuously announced throughout the duration of the virtual party. The frequency of the announcement may be based on the parameter settings determined by the user of the master device in establishing the virtual party parameters. The process proceeds to block 606.

In block 606, the master device may announce the playlist. Throughout the duration of the virtual party, a complete upcoming playlist may be continuously announced according to the parameter setting determined by the user of the master device in establishing the virtual party parameters. The process then proceeds to block 608.

In block 608, the master device may announce the current song being played in the playlist. The announcement of the current song may include, but is not limited to, song title, artist, album, composer, length, release date, etc. MP3 ID3 tags are one example of this kind of information. Throughout the duration of the song, the master device may continuously announce the current song information being played according to the parameter setting determined by the user of the master device in establishing the virtual party parameters. The process then proceeds to block 610.

In block 610, the master device may announce the song's current position. Throughout the duration of the song, the master device may continuously announce the song's position according to the parameter setting determined by the user of the master device in establishing the virtual party parameters.

Continuously announcing the playlist, current song, and song position enables newcomers who may join the virtual party in mid-stream to be able to synchronize their devices to the location of the current song in the current playlist to enable synchronized playing of the remaining songs in the playlist. This also enables a slave device to purchase or play other media selections when an item on the playlist is not available on the slave device.

In one embodiment, the frequency of the announcements may be, for example, every second, every other second, every five seconds, etc. and may vary for the virtual party announcement, playlist announcement, song information announcement, and song position announcement. Continuously sending announcement information, yet varying which information is sent at any given time saves bandwidth. In one embodiment, the song position announcement may occur most frequently, the song information announcement may occur less frequently than the song position announcement, the complete upcoming playlist announcement may occur less frequently than the song information announcement, and the virtual party information announcement may occur less frequently than the playlist announcement. For example, the song position may be announced once every second, the song information may be announce once every other second, the complete upcoming playlist may be announced once every five seconds, and the virtual party information may be announced once every ten seconds. In other embodiments, other announcement schemes may used as well.

The duplex or connection-oriented protocol comprises bi-directional communications between a master device and one or more slave devices. With the connection-oriented protocol, the master device establishes the virtual party and has control over who is listening and who may join the party. The slave devices may communicate with the master device by requesting to join a party, requesting to add one or more media selections to a playlist, etc. Once the master device has established all of the party parameters, including selecting a playlist to be played, the master device may listen to see if any slave devices want to join the virtual party. Upon receiving a request to join the virtual party from a slave device, the master device may announce the virtual party identification, the playlist, the current song, and the current song's position as indicated above with respect to FIG. 6.

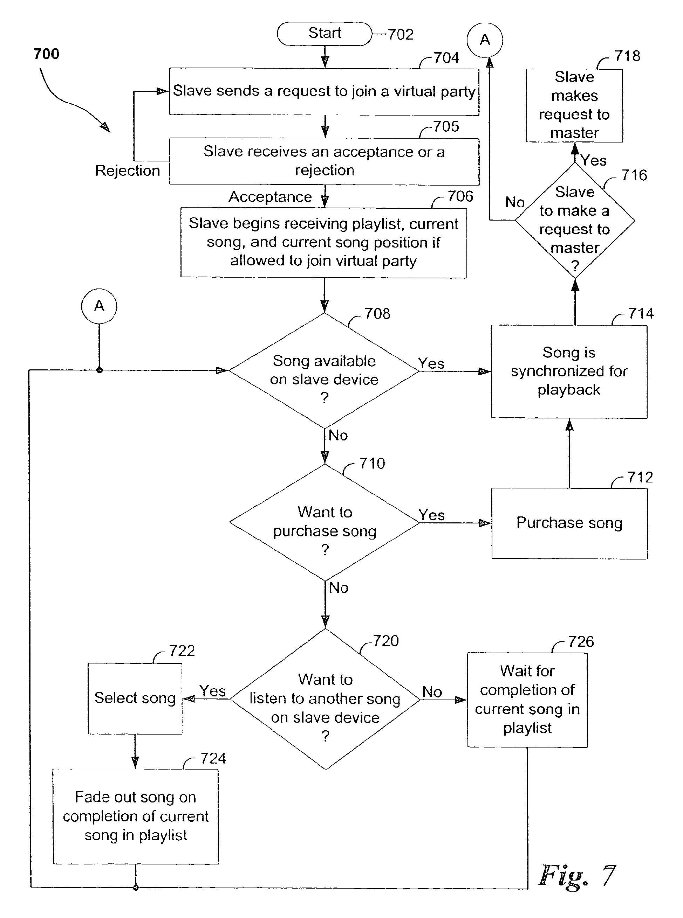

FIG. 7 is a flow diagram describing an exemplary method for slave devices in a connection-oriented virtual party environment according to an embodiment of the present invention. The invention is not limited to the embodiment described herein with respect to flow diagram 700. Rather, it will be apparent to persons skilled in the relevant art(s) after reading the teachings provided herein that other functional flow diagrams are within the scope of the invention. The process begins with block 702, where the process immediately proceeds to block 704.

In block 704, a slave device seeking to join a virtual party, finds a virtual party of interest and sends a request to join the virtual party. The process then proceeds to block 705.

In block 705, the slave device will receive an acceptance or a rejection to join the virtual party from the master device. If the slave device receives a rejection from the master device to join the virtual party, the process proceeds back to block 704, to enable the slave device to seek out another virtual party to join. Returning to block 705, if the slave device receives an acceptance to join the virtual party, the process proceeds to block 706.

In block 706, the slave device will begin receiving the playlist, current song, and current song position. The process proceeds to decision block 708.

In decision block 708, it is determined whether the song is available on the slave device. If it is determined that the current song is not available on the slave device, the process proceeds to decision block 710.

In decision block 710, it is determined whether the slave device would like to purchase the song. If it is determined that the slave device would like to purchase the song, then the process proceeds to block 712.

In block 712, the song may be purchased in a manner well known to those skilled in the relevant art(s). In one embodiment, the song may be purchased via an out-of-band channel. The process then proceeds to block 714.

Returning to decision block 710, if it is determined that the slave device would not like to purchase the song, then the process proceeds to decision block 720.

In decision block 720, it is determined whether the user of the slave device would like to listen to another song on the slave device personal media player. If the user of the slave device would like to listen to another song on the slave device personal media player, the user may select the song for immediate play in block 722. The process then proceeds to block 724.

In block 724, on completion of the current song from the playlist for the virtual party, the song selected by the user of the slave device to replace the missing song on the playlist is faded out. The process then proceeds to back to decision block 708, where it determines whether the next song may be found on the slave device.

Returning to decision block 708, if it is determined that the song is available on the slave device, the process proceeds to block 714.

In block 714, the song is synchronized for playback. The process then proceeds to decision block 716.

In decision block 716, it is determined whether the slave device would like to make a request to the master device. If it is determined that the slave device would like to make a request to the master device, then the process proceeds to block 718.

In block 718, the slave device may make a request to the master device. In one embodiment, the request may be made using an out-of-band channel. In one embodiment, the slave device may make a playlist, transport, or other type of request. For example, the slave device may make a request to add a song to the playlist. Another example may be that the slave device, after reviewing the entire playlist, may need one or more songs on the playlist that are currently missing from the slave device. In this instance, the slave device may make a request to the master device to receive a copy of the missing song(s). If the master device has the appropriate digital rights to copy the song(s) to the slave device, then the request may be fulfilled. The process then proceeds back to decision block 708, where it determines whether the next song may be found on the slave device.

Returning to decision block 720, if it is determined that the user of the slave device does not want to listen to another selection, the process proceeds to block 726.

In block 726, after the completion of the current song from the playlist for the virtual party, the process then proceeds to back to decision block 708, where it determines whether the next song may be found on the slave device.

With a half-duplex or simplex protocol, only the master device may transmit signals. The slave devices only receive the transmitted signals from the master device, and do not transmit any signals back to the master device, thus, saving power and bandwidth. With this protocol, the master establishes the virtual party, and in some instances, has little, if no control over who is listening and who may join the virtual party unless security measures are invoked to prevent unwanted participants from joining the virtual party. For example, encryption keys may be used to encrypt the signals being transmitted by the master device. If a slave device does not have the appropriate pass key, then that slave device cannot join the virtual party. With the half-duplex protocol, the master device does not need to listen to see if slave devices want to join the virtual party. Instead, the master device will announce the party identification, announce the playlist, announce the song, and announce the song's position as indicated above with reference to FIG. 6.

With a hybrid protocol or connectionless duplex, the master device establishes the virtual party. The slave devices may be passive listeners or may use connection or connectionless messaging to communicate messages and/or operations to the master device. The connection or connectionless messaging may occur via an out-of-band channel. With the hybrid protocol, the master device performs all of the same responsibilities of establishing the virtual party as described above with reference to FIG. 5. The master device also announces the party identification, playlist, song and song's position as indicated above with reference to FIG. 6.

Certain aspects of embodiments of the present invention may be implemented using hardware, software, or a combination thereof and may be implemented in one or more computer systems or other processing systems. In fact, in one embodiment, the methods may be implemented in programs executing on programmable machines such as mobile or stationary computers, personal digital assistants (PDAs), set top boxes, cellular telephones and pagers, and other electronic devices that each include a processor, a storage medium readable by the processor (including volatile and non-volatile memory and/or storage elements), at least one input device, and one or more output devices. Program code is applied to the data entered using the input device to perform the functions described and to generate output information. The output information may be applied to one or more output devices. One of ordinary skill in the art may appreciate that embodiments of the invention may be practiced with various computer system configurations, including multiprocessor systems, minicomputers, mainframe computers, and the like. Embodiments of the present invention may also be practiced in distributed computing environments where tasks may be performed by remote processing devices that are linked through a communications network.

Each program may be implemented in a high level procedural or object oriented programming language to communicate with a processing system. However, programs may be implemented in assembly or machine language, if desired. In any case, the language may be compiled or interpreted.

Program instructions may be used to cause a general-purpose or special-purpose processing system that is programmed with the instructions to perform the methods described herein. Alternatively, the methods may be performed by specific hardware components that contain hardwired logic for performing the methods, or by any combination of programmed computer components and custom hardware components. The methods described herein may be provided as a computer program product that may include a machine readable medium having stored thereon instructions that may be used to program a processing system or other electronic device to perform the methods. The term "machine readable medium" or "machine accessible medium" used herein shall include any medium that is capable of storing or encoding a sequence of instructions for execution by the machine and that causes the machine to perform any one of the methods described herein. The terms "machine readable medium" and "machine accessible medium" shall accordingly include, but not be limited to, solid-state memories, optical and magnetic disks, and a carrier wave that encodes a data signal. Furthermore, it is common in the art to speak of software, in one form or another (e.g., program, procedure, process, application, module, logic, and so on) as taking an action or causing a result. Such expressions are merely a shorthand way of stating the execution of the software by a processing system to cause the processor to perform an action or produce a result.

While various embodiments of the present invention have been described above, it should be understood that they have been presented by way of example only, and not limitation. It will be understood by those skilled in the art that various changes in form and details may be made therein without departing from the spirit and scope of the invention as defined in the appended claims. Thus, the breadth and scope of the present invention should not be limited by any of the above-described exemplary embodiments, but should be defined in accordance with the following claims and their equivalents.

## Claims

1. A protocol for mutually-shared experiences comprising;
a connection-oriented protocol for enabling bi-directional communications between a master device and one or more slave devices, wherein the master device establishes a virtual party and listens for slave devices that want to join the virtual party, wherein upon receiving at least one request to join the virtual party, the master device to start play of a playlist for the virtual party, wherein the playlist comprises a plurality of media selections, the master device to further announce the playlist for the virtual party, announce a current media selection being played from the playlist, and announce a current position of the current media selection being played from the playlist, wherein announcing the playlist, the current media selection, and the current position of the current media selection enables each of the slave devices to be synchronized to play each media selection from the playlist at the same time each of the media selections from the playlist is being played on the master device.

2. The protocol of claim 1, wherein the master device and each of the slave devices comprise personal media players.

3. The protocol of claim 1, wherein the master device comprises a server and each of the slave devices comprise personal media players.

4. The protocol of claim 1, wherein the master device to continuously announce the virtual party, the playlist, the current media selection, and the current position of the current media selection.

5. The protocol of claim 4, wherein the current position of the current media selection is announced most frequently, the current media selection is announced less frequently than the current position of the current media selection, the playlist is announced less frequently than the current media selection, and the virtual party is announced less frequently than the playlist.

6. The protocol of claim 1, wherein the master device and each of the slave devices comprise network addressable devices, wherein the master device and each of the slave devices communicate over a network.

7. The protocol of claim 6, wherein the network comprises a wireless network.

8. The protocol of claim 6, wherein the network comprises a wired network.

9. The protocol of claim 1, wherein if one or more of the slave devices are missing one or more of the plurality of media selections from the playlist, the one or more slave devices to go online and purchase the missing one or more of the plurality of media selections.

10. The protocol of claim 1, wherein if one of the slave devices is missing a media selection from the plurality of media selections on the playlist, the slave device to select a replacement media selection to be played while the missing media selection is being played, wherein the replacement media selection fades away when the missing media selection is complete.

11. The protocol of claim 1, further comprising:
a connectionless protocol for enabling communications from a master device to one or more slave devices, wherein the master device to establish and start a virtual party having a playlist, wherein the playlist comprises a plurality of media selections, wherein the master device to continuously announce the playlist, announce a current media selection being played on the playlist, and announce a current position of the current media selection being played on the playlist, and wherein the one or more slave devices to receive the playlist, the current media selection, and the current position of the current media selection to enable the one or more slave devices to be synchronized to play each media selection from the playlist at the same time each of the media selections from the playlist is being played on the master device.

12. The protocol of claim 8, wherein the master device and the one or more slave devices are media players.

13. The protocol of claim 8, wherein the master device comprises a server and each of the slave devices comprise personal media players.

14. The protocol of claim 8, wherein the master device to continuously announce the virtual party, the playlist, the current media selection, and the current position of the current media selection.

15. The protocol of claim 14, wherein the current position of the current media selection is announced most frequently, the current media selection is announced less frequently than the current position of the current media selection, the playlist is announced less frequently than the current media selection, and the virtual party is announced less frequently than the playlist.

16. The protocol of claim 8, wherein if one of the one or more slave devices is missing a media selection from the plurality of media selections on the playlist, the one or more slave devices to purchase the media selection via an out-of-band channel.

17. The protocol of claim 8, wherein if one of the one or more slave devices is missing a media selection from the plurality of media selections on the playlist, the one or more slave devices to to select a replacement media selection to be played while the missing media selection is being played, wherein the replacement media selection fades away when the missing media selection is complete.

18. The protocol of claim 8, wherein the master device and the one or more slave devices communicate over a network.

19. The protocol of claim 18, wherein the network comprises a wireless network.

20. The protocol of claim 18, wherein the network comprises a wired network.

21. The protocol of claim 1, further comprising:
a hybrid protocol for enabling a master device to establish a virtual party for a plurality of slave devices, the virtual party comprising a playlist including a plurality of media selections, the master device to start play of the playlist, wherein while the playlist is playing the master device to announce a current media selection being played from the playlist and a current position of the current media selection being played, wherein each of the slave devices to passively receive the playlist, the current media selection, and the current position of the current media selection to enable each of the plurality of slave devices to be synchronized to play each media selection from the playlist at the same time each of the media selections from the playlist is being played on the master device, wherein the plurality of slave devices communicate messages and/or operations to the master device via an out-of-band channel.

22. The protocol of claim 1, wherein establishing the virtual party comprises establishing virtual party parameters and generating or selecting the playlist.

23. The protocol of claim 22, wherein the virtual party parameters include an identification for the virtual party and a title for the virtual party.

24. The protocol of claim 22, wherein the virtual party parameters include a playlist identification, a playlist title, and a next song gap time.

25. The protocol of claim 22, wherein the virtual party parameters include a length of time for the virtual party, a length of time between announcements of the playlist, a length of time between announcements of a media selection, and a length of time between announcements of a media selection position.

26. The protocol of claim 22, wherein the virtual party parameters include a virtual party invitation list.

27. The protocol of claim 22, wherein generating a playlist for the virtual party comprises choosing the media selections to be placed on the playlist, wherein each media selection includes an identification, title, and duration of length.

28. The protocol of claim 1, wherein the media selections comprise one of songs or videos.

29. The protocol of claim 22, further comprising selecting a media selection from the playlist in which to begin the virtual party.

30. A method for controlling a virtual party comprising:
enabling a master device to announce the virtual party, wherein the master device listens for any slave devices wanting to join the party;
upon accepting at least one request from a slave device requesting to joint the virtual party, the method enabling the master device to start the virtual party by:
announcing the virtual party;
continuously announcing a playlist;
continuously announcing a current media selection playing from the playlist; and
continuously announcing a current position of the current media selection playing from the playlist,
wherein continuously providing the playlist, the current media selection, and the current position of the current media selection enables the slave device to be synchronized with the master device to enable the same media selection to be played at the same time on both the master device and the slave device.

31. The method of claim 30, wherein the playlist comprises one of songs or video.

32. The method of claim 30, wherein the master device and the slave device comprise a personal media player.

33. The method of claim 30, wherein the master device comprises a server and the slave device comprises a personal media player.

34. A method for participating in a virtual party comprising:
after finding the virtual party, sending a request to join the virtual party;
receiving an acceptance;
receiving a playlist, the playlist comprising a plurality of media selections;
continuously receiving a current media selection and a current position for the media selection, wherein the playlist, the current media selection, and the current position for the media selection enable a slave media device to be synchronized with a master media device, wherein the slave and master media devices each play the same media selections at the same time.

35. The method of claim 34, wherein if one or more media selections are missing on the slave media device, enabling the slave media device to purchase the one or more missing media selections.

36. The method of claim 34, wherein if one or more media selections are missing on the slave media device, enabling the slave media device to play another media selection from the slave media device while the one or more missing media selections are being played on the master device, wherein when the one or more missing media selections are completed on the master media device, the media selection being played on the slave media device fades away.

37. An article comprising: a storage medium having a plurality of machine accessible instructions, wherein when the instructions are executed by a processor, the instructions provide for
enabling a master device to announce the virtual party, wherein the master device listens for any slave devices wanting to join the party;
upon accepting at least one request from a slave device requesting to joint the virtual party, the method enabling the master device to start the virtual party by:
announcing the virtual party;
continuously announcing a playlist;
continuously announcing a current media selection playing from the playlist; and
continuously announcing a current position of the current media selection playing from the playlist,
wherein continuously providing the playlist, the current media selection, and the current position of the current media selection enables the slave device to be synchronized with the master device to enable the same media selection to be played at the same time on both the master device and the slave device.

38. The article of claim 37, wherein the playlist comprises one of songs or video.

39. The article of claim 37, wherein the master device and the slave device comprise a personal media player.

40. The article of claim 37, wherein the master device comprises a server and the slave device comprises a personal media player.

41. An article comprising: a storage medium having a plurality of machine accessible instructions, wherein when the instructions are executed by a processor, the instructions provide for
after finding the virtual party, sending a request to join the virtual party;
receiving an acceptance;
receiving a playlist, the playlist comprising a plurality of media selections;
continuously receiving a current media selection and a current position for the media selection, wherein the playlist, the current media selection, and the current position for the media selection enable a slave media device to be synchronized with a master media device, wherein the slave and master media devices each play the same media selections at the same time.

42. The article of claim 41, wherein if one or more media selections are missing on the slave media device, further comprising instructions for enabling the slave media device to purchase the one or more missing media selections.

43. The article of claim 41, wherein if one or more media selections are missing on the slave media device, further comprising instructions for enabling the slave media device to play another media selection from the slave media device while the one or more missing media selections are being played on the master device, wherein when the one or more missing media selections are completed on the master media device, the media selection being played on the slave media device fades away.
